# EUROPEAN PATENT SPECIFICATION

(11) **EP 0 576 044 B1**
(45) Date of publication and mention of the grant of the patent: **06.11.1996**
(21) Application number: 93114170.9
(22) Date of filing: 09.03.1988
(51) Int. Cl.: B62D 6/00, B62D 101/00, B62D 113/00, B62D 137/00

(54) **A yaw motion control device for a vehicle**
Gierkontrolleinrichtung für ein Fahrzeug
Dispositif de contrôle de lacet pour véhicule

(30) Priority: 09.03.1987 JP 53501/87; 09.03.1987 JP 53502/87; 09.03.1987 JP 53503/87; 02.10.1987 JP 250167/87; 02.10.1987 JP 250168/87; 02.10.1987 JP 250169/87
(43) Date of publication of application: 29.12.1993
(62) Divisional of application: 88103736.0
(73) Proprietor: HONDA GIKEN KOGYO KABUSHIKI KAISHA, Minato-ku Tokyo 107 (JP)
(72) Inventor: Shiraishi,Shuji c/o Kabushiki Kaisha Honda, Wako-shi, Saitama (JP); Kiryu, Hironobu c/o Kabushiki Kaisha Honda, Wako-shi, Saitama (JP)
(74) Representative: Prechtel, Jörg, Dipl.-Phys. Dr.

(56) References cited:
- DE-A- 3 608 420

## Description

The present invention relates to a yaw motion control device for a vehicle.

Conventionally, an antilock brake is known as a control device for controlling a yaw motion of the vehicle. However, the antilock brake is primarily directed to the control of a braking performance, and concerning a motion performance, it simply functions to prevent a reduction in side resistant force of tires.

In JP-A-191875/85 a vehicular steering controlling method is described, wherein a lateral acceleration of the vehicle is calculated on the basis of detected values of steering angle and vehicle speed. This calculated lateral acceleration is compared with a detected lateral acceleration. The resulting deviation signal is input to a controller for controlling the steering anle of the rear wheels of a vehicle with four-wheel steering. Instead of the lateral acceleration a yaw rate can be calculated on the basis of the detected steering angle and vehicle speed.

In JP-A-113710/85 an automobile cornering sensor is described, which calculates the centripetal acceleration on the basis of the difference between the rotating speeds of left and right rotating wheels of the vehicle. The equation of motion of the vehicle is used for exact determination of vehicle driving parameters.

US-PS 4,679,808 discloses a vehicle motion estimating system in which in actual yaw rate is detected and in which further an estimated value for the vehicle motion is determined in accordance with the steering wheel angle and with the vehicle speed by using mathematical operations according to a predetermined vehicle model. The actual yaw rate is compared to a thus estimated yaw rate. According to a result of the comparison, a vehicle characterizing parameter, such as a cornering power, is adjustated.

The object of the present invention is to provide an improved yaw motion control device for a vehicle, especially with respect to simple construction and better performance.

This object is solved by a yaw motion control device for a vehicle according to claim 1.

According to the invention, the yaw motion control device comprises a steering angle sensor for detecting a steering angle of a steering wheel, said reference yaw rate generating means generating said reference yaw rate in response to an output from said steering angle sensor. To generate the reference yaw rate, it is therefore only necessary to provide a steering angle sensor. For improving the accuracy of reference yaw rate determination, said reference yaw rate generating means is designed for generating said reference yaw rate in response to an output from a vehicle speed detector (in combination with the output of said steering angle sensor).

According to the invention said reference yaw rate generating means is designed to generate said reference yaw rate in response to a history of an output of said steering angle sensor. In this way, the rate of changing of the steering angle is taken into account in determining the reference yaw rate.

When the tendency of over-steering occurs e.g. in a front wheel drive vehicle, a yaw motion control device only operating on the basis of a deviation between a detected yaw rate and a calculated reference yaw rate may be undesirably brought into an over-control condition. To provide a yaw motion control device for a vehicle which is designed to control the yaw motion according to a steering characteristic when a yaw rate of the vehicle has slipped from a desired value, a steering characteristic determining means is provided for determining a steering characteristic of said vehicle according to an output from said reference yaw generating means and an output from said yaw rate detecting means, and said control characteristic correcting means is designed for changing a control characteristic of said yaw motion correcting means in response to an output from said steering characteristic determining means.

The control of the yaw motion can therefore be changed according to a steering characteristic. For example, when the tendency of over-steering occurs even in a front wheel drive vehicle, it is possible to prevent that the vehicle will yaw in an undesirable direction.

The yaw motion correcting means may comprise a driving wheel output torque control device, especially an engine output control device. However, said yaw motion correcting means may also comprise a device for controlling the steering angle of steered wheels, preferably as part of a four-wheel steering control means.

According to a further aspect of the invention, a steering characteristics discriminating device is provided. This steering characteristics discriminating device comprises the reference yaw rate generating means for generating a reference yaw rate, the yaw rate detecting means for detecting a yaw rate and a steering characteristics determining means for determining a steering characteristic of said vehicle according to an output from said reference yaw generating means and an output from said yaw rate detecting means. Such a steering characteristics discriminating device may be used as as sensor for over-steering or under-steering of a vehicle. Such a sensor may be used e.g. in connection with a four-wheel steering device with control of the steering angle to ensure stable driving conditions. Such a sensor may also be used within a four-wheel drive device with control of the variable distribution ratio to ensure stable driving conditions.

Further preferred embodiments of the invention are described in the subclaims.

Preferred embodiments of the invention will be described with reference to the drawings.
- Fig. 1: is a general block diagram of a first preferred embodiment of the present invention;
- Fig. 2: is a block diagram of the yaw rate detecting means shown in Fig. 1;
- Fig. 3: is a general block diagram of a second preferred embodiment of the present invention;
- Fig. 4: is a graph showing an exemplary output characteristic of the constant selection circuit shown in Fig. 3;
- Fig. 5: shows an exemplary output characteristic of the control characteristic correcting means as shown in Fig. 3; and
- Fig. 6: is a general block diagram of a third preferred embodiment of the present invention.

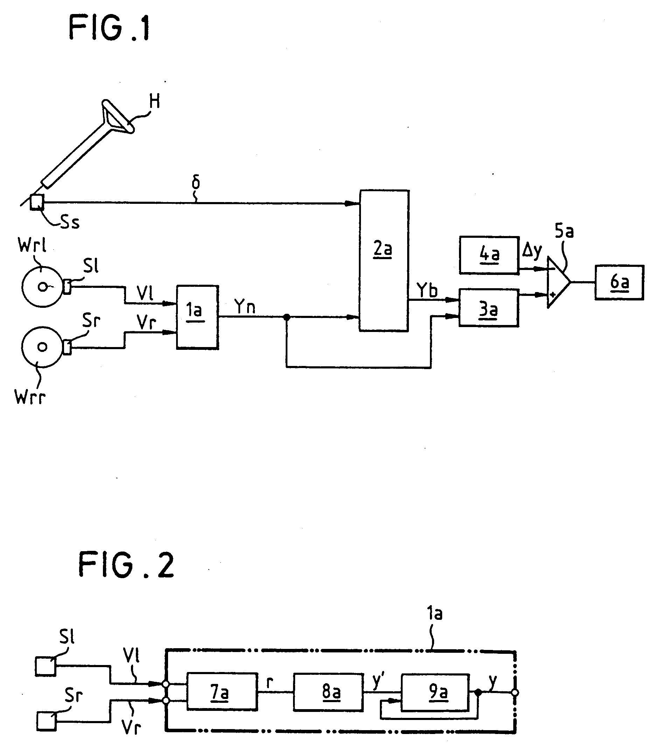

Referring now to Fig. 1, left and right rear wheels Wrl and Wrr as trailing wheels in a front wheel drive vehicle are provided with independent speed sensors S1 and Sr, respectively, and output signals from the speed sensors S1 and Sr representing approximate ground speeds of both right and left vehicle sides are input to a yaw rate detecting means 1a. An output from the yaw rate detecting means 1a is input to a reference yaw rate generating means 2a, and is also input to a subtracting means 3a. A steering handle H is provided with a steering angle sensor Ss, and an output from the steering angle sensor Ss is input to the reference yaw rate generating means 2a. An output from the reference yaw rate generating means 2a is input to the subtracting means 3a, and an output from the subtracting means 3a is input to a non-inversion input terminal of a comparator 5a. On the other hand, a reference value from a reference circuit 4a is input to an inversion input terminal of the comparator 5a. An output from the comparator 5a is input to a driving wheel output torque control device 6a, e.g., an engine output control device as the yaw motion correcting means.

Referring to Fig. 2, the yaw rate detecting means 1a includes a subtraction circuit 7a, a multiplication circuit 8a and a filter 9a. The subtraction circuit 7a detects a difference r between wheel speeds Vr and Vl ($\text{r=Vr-Vl}$) detected by the speed sensors Sr and S1, and the multiplication circuit 8a multiplies the difference r by a certain proportional constant d to obtain an approximate value y' of a yaw rate. The proportional constant d describes a tread between the rear wheels Wrl and Wrr, which is d=1, for example. The filter 9a serves to eliminate the influence of vibration of a vehicle suspension to the wheel speeds Vl and Vr, which is a recursive filter. Since the fluctuation of wheel speeds Vl and Vr due to resonance of wheel vibration and suspension vibration during running on a rough road is about 10 Hz, and a frequency range of the yaw rate employable for the control of a vehicle motion is 0-2 Hz, the filter 9a operates to filter the approximate value y' of the yaw rate with a frequency range of 2 Hz or more used as a reduction range.

The filter 9a generates an output yn as calculated in accordance with the following expression (1).${\text{yn = α}}_{\text{1}} {\text{*y}}_{\text{n-1}} {\text{+ α}}_{\text{2}} {\text{*y}}_{\text{n-2}} {\text{+ α}}_{\text{3}} {\text{*y}}_{\text{n-3}} {\text{+ β}}_{\text{1}} {\text{*y'}}_{\text{n}} {\text{+ β}}_{\text{2}} {\text{*y'}}_{\text{n-1}} {\text{+ β}}_{\text{3}} {\text{*y'}}_{\text{n-2}}$ where, α₁ ... α₃ and β₁ ... β₃ are constants determined by an experimental result, and the suffixes n, n-1 and n-2 stand for a present value and a previous value, etc. in each cycle where the calculation in filtering is repeated.

The reference yaw rate generating means 2a serves to calculate a reference yaw rate y_{b} to be presently desired according to the history of a steering angle δ(δₙ₋₁, δₙ₋₂) obtained by the steering angle sensor Ss and the history of the yaw rate y (yₙ₋₁, yₙ₋₂) obtained by the yaw rate detecting means 1a. The reference yaw rate y_{b} is calculated in accordance with the following expression (2).${\text{y}}_{\text{b}} {\text{= -a}}_{\text{1}} {\text{*y}}_{\text{n-1}} {\text{- a}}_{\text{2}} {\text{*y}}_{\text{n-2}} {\text{+ b}}_{\text{1}} {\text{*δ}}_{\text{n-1}} {\text{+ b}}_{\text{2}} {\text{*δ}}_{\text{n-2}}$ where, a₁, a₂, b₁ and b₂ stand for parameters changing with a vehicle speed, and they are preliminarily given in a map as follows:
a₁ = -1.4 - +1.8
a₂ = +0.5 - +0.8
b₁ = +0.01 - -0.0008
b₂ = +0.009 - +0.001

The subtracting means 3a calculates an absolute value |y_{b} - yₙ| of a difference between the reference yaw rate y_{b} and the yaw rate y. That is, a slippage between the yaw rate y_{b} to be presently desired and the present yaw rate yₙ is calculated, and the slippage is compared with a reference value Δy set by the reference circuit 4a by the comparator 5a. Then, an engine output is controlled by the engine output control device 6a according to the result of the comparison Further, the reference value y is determined in response to vehicle speed beforehand.
In operation, the yaw rate y of the vehicle is obtained by multiplying the difference (Vr - Vl) in wheel speeds between the left and right trailing wheels Wrl and Wrr by the proportional constant d, and then filtering the product to eliminate the influence of the vehicle suspension Thus, the yaw rate y can be easily obtained with no problems in practical use.

Then, the difference between the yaw rate y as presumed above and the reference yaw rate y_{b} calculated as a value to be presently desired according to the history of the steering angle δ and the yaw rate y is compared with the reference value y, thereby preliminarily perceiving that the vehicle will yaw in an undesirable direction. Thus, the yaw motion may be controlled.

In a front wheel drive vehicle, for example, when an excessive driving force is applied as the vehicle is steered, the tendency of under-steering occurs. As a result, when it is detected that the vehicle has yawed in an undesirable direction, the engine output control device 6a operates in response to the output from the comparator 5a to reduce an engine output. In response to the reduction in the engine output, a driving force of driving wheels is reduced, and instead thereof, a limited side force of the driving wheels is increased, thereby preventing the understeering as mentioned above. On the other hand, in the case of a rear wheel drive vehicle, the tendency of over-steering occurs when an excessive driving force is applied. However, the over-steering may be prevented by reducing the driving force in the same manner as the case of the front wheel drive vehicle. Thus, when the actual yaw rate y has approached the reference yaw rate y_{b} by reducing the engine output, that is, when the absolute value |y_{b} - yₙ| becomes smaller than the reference value Δy, the reduction in the engine output is released, and a normal engine output control is restored. As described above, the actual yaw rate y is controlled to be near the reference yaw rate y_{b} by controlling the engine output, and is made accord with a yaw rate at a driver's will in the vehicle.

In the case of the rear wheel drive vehicle, the difference in wheel speeds between trailing wheels to be used in the calculation of the yaw rate y may be a difference in wheel speeds between right and left front wheels also serving as steering wheels.

The reduction in engine output by the engine control device 6a is achieved, for example, by operating a suction throttle valve control device to be driven by a pulse motor or the like into a valve closing direction, decreasing or cutting a fuel to be supplied to the engine by a fuel control device, cutting or retarding an ignition timing by an engine ignition device, or reducing a supercharged pressure by a supercharged pressure control device for controlling a suction air to be supplied to the engine.

As described above, the device of the present invention in the first aspect comprises a yaw rate detection means for detecting a yaw rate of said vehicle, a steering angle sensor for detecting a steering angle of a steering handle, a refererence yaw rate generating means for generating reference yaw rate according to an output from said steering angle sensor, and a yaw motion correcting means for controlling a yaw motion of said vehicle according to an ouput from said reference yaw rate generating means and an output from said yaw rate detecting means. Therefore, it is possible to perceive that the vehicle will yaw in an undesirable direction and control the yaw motion.

the device of the present invention in the second aspect is featured in that the reference yaw rate generating means generates the reference yaw rate according to the output from the yaw rate detecting means and the steering angle sensor, in addition to the constitution of the first aspect of the present invention. Therefore, it is possible to control the yaw motion more precisely in addition to the first aspect of the present invention.

The device of the present invention in a further aspect comprises speed detectors respectively for individually detecting the ground speed of the right side of a vehicle and that of the left side of the vehicle, speed difference calculating means for calculating the difference between the respective detection values of the speed detectors, and speed difference calculating means for calculating the difference between the respective detection values of the speed sensors to determine a yaw rate on the basis of the difference between the right and left sides of the vehicle in ground speed. Therefore, it is possible to detect a yaw rate in simple construction.

The device of the present invention in a further aspect is featured in that speed detectors respectively for individually detecting the ground speed of the right side of a vehicle and that of the left side of the vehicle, speed difference calculating means for calculating the difference between the respective detection values of the speed detectors, and a filter connected to the speed difference calculating means to filter frequency components beyond a predetermined frequency from the output of the speed difference calculating means to determine a yaw rate. Accordingly, it is possible to provide an improved yaw rate detecting device capable of detecting the yaw rate of a vehicle at a high accuracy regardless of vibrations of the suspension.

Although the above-described embodiment employs thesystem of determining reference yaw rate based upon history of yaw rate and history of steering angle, the reference yaw rate may be determined by only history of yaw rate.

As described above, the device of the present invention comprises a yaw rate detecting means for detecting a yaw rate of said vehicle, a reference yaw rate generating means for generating reference yaw rate based upon history of said yaw rate and a yaw motion correcting means for controlling a yaw motion of said vehicle according to an output from said reference yaw rate generating means and an output from said yaw rate detecting means. Therefore, it is possible to perceive that the vehicle will yaw in an undesirable direction and control the yaw motion.

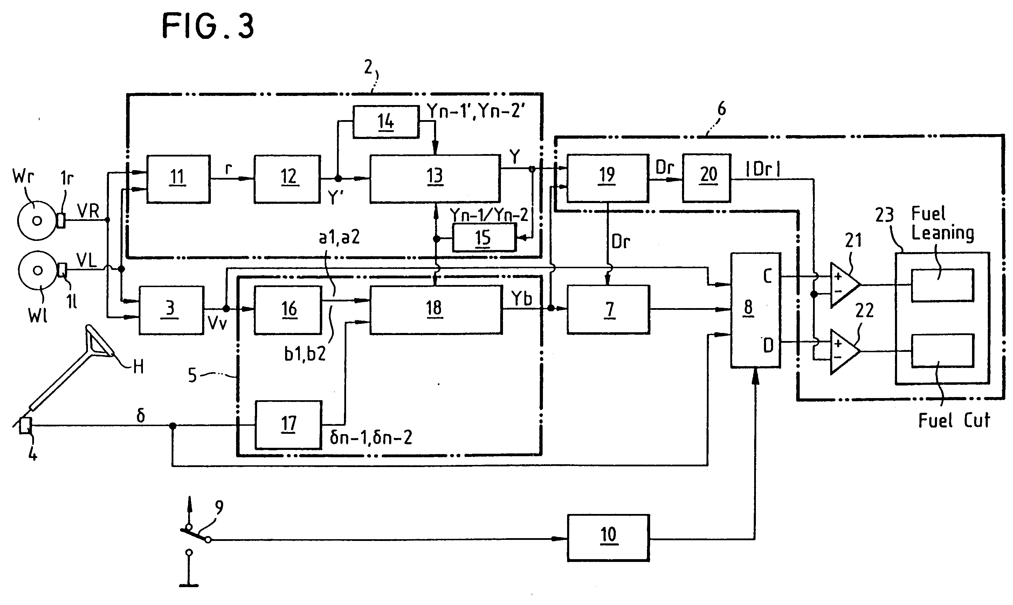

Referring now to fig. 3 which shows a first preferred embodiment of the present invention, left and right trailing wheels Wl and Wr of a vehicle are provided with independent speed sensors 1l and 1r, resepctively, and wheel speeds Vl and Vr detected by the speed sensors 1l and 1r are input to a yaw rate detecting means 2 and a vehicle speed detector 3. A steering handle H is provided with a steering angle sensor 4. A steering angle δ detected by the steering angle sensor 4, a vehicle speed Vv obtained by the vehicle speed detector 3, and a history of a yaw rate y obtained by the yaw rate detecting means 2 are input to a reference yaw rate generating means 5. The yaw rate y obtained by the yaw rate detecting means 2 and a reference yaw rate y_{b} generated from the reference yaw rate generating means 5 are input to a yaw motion correcting means 6. A deviation ${\text{Dr(= y - y}}_{\text{b}} \text{)}$between the yaw rate y and the reference yaw rate y_{b} is obtained in the yaw motion correcting means 6. The deviation Dr and the reference yaw rate y_{b} are input to a steering characteristic determining means 7. The result of determination by the steering characteristic determining means, the vehicle speed Vv from the vehicle speed detector 3 and the steering angle δ from the steering angle sensor 4 are input to a control characteristic correcting means 8. Further, the vehicle is provided with a switch 9 for selecting an output voltage level to a high level or a low level according to the condition where the driving wheels are the front wheels or the rear wheels. An output from the switch 9 is input to driving wheel determining circuit 10, and the result of determination by the driving wheel determining circuit 10 is input to the control characteristic correcting means 8. The control characteristic correcting means 8 feeds a signal varying with each input signal to the yaw motion correcting means 6.

The yaw rate detecting means 2 includes a subtraction circuit 11, a multiplication circuit 12, a filter 13, a history accumulation circuit 14 for accumulating an output history of the multiplication circuit 12, and a history accumulation circuit 15 for accumulating an output history of the filter 13. The subtraction circuit 11 provides a difference r between the wheel speeds Vl and Vr ($\text{r = Vr - Vl}$) detected by the speed sensors 1l and 1r, and the multiplication circuit 12 multiplies the difference r by a certain proportional constant d to obtain an approximate value $\text{y' ( = r * d)}$ of a yaw rate. The proportional constant d is a tread width between the trailing wheels Wl and Wr, which is d = 1, for example. The filter 13 serves to eliminate the influence of vibration of a vehicle suspension to the wheel speeds Vl and Vr, which is a recursive filter. Since the fluctuation of the wheel speeds Vl and Vr due to resonance of wheel vibration and suspension vibration during running on a rough road is about 10 Hz, and a frequency range of the yaw rate employable for the control of a vehicle motion is 0 - 2 Hz, the filter 13 operates to filter the approximate cvalue y' of the yaw rate with a frequency range of 2 Hz or more used as a reduction range. The filter 13 generates an output yₙ as calculated in accordance with the following expression (1).${\text{yn = α}}_{\text{1}} {\text{*y}}_{\text{n-1}} {\text{+ α}}_{\text{2}} {\text{*y}}_{\text{n-2}} {\text{+ α}}_{\text{3}} {\text{*y}}_{\text{n-3}} {\text{+ β}}_{\text{1}} {\text{*y'}}_{\text{n}} {\text{+ β}}_{\text{2}} {\text{*y'}}_{\text{n-1}} {\text{+ β}}_{\text{3}} {\text{*y'}}_{\text{n-2}}$ where, α₁ ... α₃ and β₁ ... β₃ are constants determined by an experimental result, and the suffixes n, n-1 and n-3 stand for a present value and a previous value, etc. in each cycle where the calculation in filtering is repeated. A last value, a before-last value and so on of the approximate value y' of the yaw rate are input from the history accumulation circuit 14 to the filter 13, while a last value, a before-last value and so on of the yaw rate y are input from the history accumulation circuit 15 to the filter 13.

The vehicle speed detector 3 serves to output the vehicle speed Vv according to the wheel speeds Vl and Vr detected by the speed sensors 1l and 1r. For example, the larger value of both the wheel speeds Vl and Vr is output as the vehicle speed Vv.

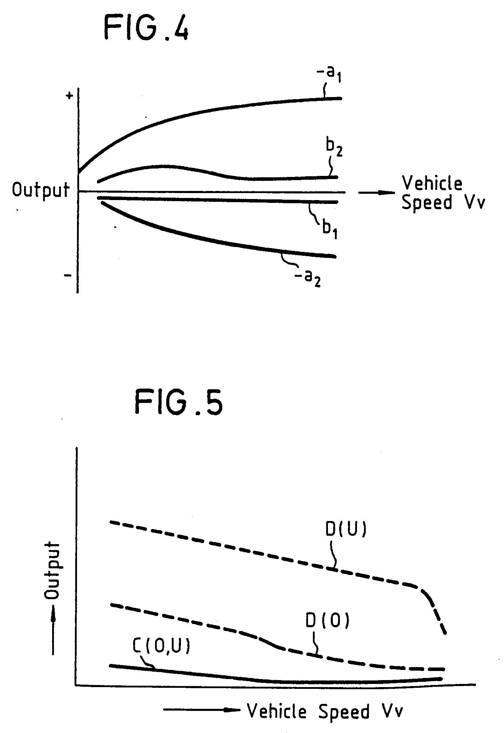

The reference yaw rate generating means 5 includes a constant selection circuit 16, a history accumulation circuit 17 and an arithmetic circuit 18. The constant selction circuit 16 serves to select constants a₁, a₂, b₁ and b₂ to be used in the calculation in the arithmetic circuit 18 according to the vehicle speed Vv obtained by the vehicle speed detector 3. The constants a₁, a₂, b₁ and b₂ are defined as shown in Fig. 4, for example, and they are input to the arithmetic circuit 18 according to the vehicle speed. The history accumulation circuit 17 is adapted to input the history of the steering angle δ detected by the steering angle sensor 4 to the arithmetic circuit 18. The arithmetic circuit 18 serves to calculate a reference yaw rate y_{b} to be presently desired according to the history of the yaw rate y from the history accumulation circuit 15 in the yaw rate detecting means 2 and the history of the steering anlge δ from the history accumulation circuit 17. The reference yaw rate y_{b} is calculated in accordance with the following expression (2).${\text{y}}_{\text{b}} {\text{= -a}}_{\text{1}} {\text{*y}}_{\text{n-1}} {\text{- a}}_{\text{2}} {\text{*y}}_{\text{n-2}} {\text{+ b}}_{\text{1}} {\text{*δ}}_{\text{n-1}} {\text{+ b}}_{\text{2}} {\text{*δ}}_{\text{n-2}}$

The yaw rate correcting means 6 includes a deviation calculation circuit 19 for providing ${\text{Dr(= y - y}}_{\text{b}} \text{)}$ between the yaw rate y obtained by the yaw rate detecting means 2 and the reference yaw rate y_{b} obtained by the reference yaw rate generating means 5, an absolute value generating circuit 20 for generating an absolute value of the deviation Dr, first and second comparators 21 and 22 for receiving an output from the absolute value generating circuit 20 at the respective inversion terminals, and a driving wheel output torque control circuit 23 connected to the respective output terminals of the first and second comparators 21 and 22. The driving wheel output torque control circuit 23 serves to control fuel to be supplied to an engine, for example. When the output from the first comparator 21 is in a low level, a quantity of fuel to be supplied is decreased to make a fuel mixture lean, while then the output from the second comparator 22 is in a low level, the supply of fuel is cut.

The steering characteristic determining means 7 receives the reference yaw rate y_{b} from the reference yaw rate generating means 5 and the deviation Dr from the deviation calculation circuit 19, and determines a steering characteristic according to the inputs Dr and y_{b}. That is, the criterion shown below in Table 1 is preliminarily defined in the steering characteristic determining means 7.

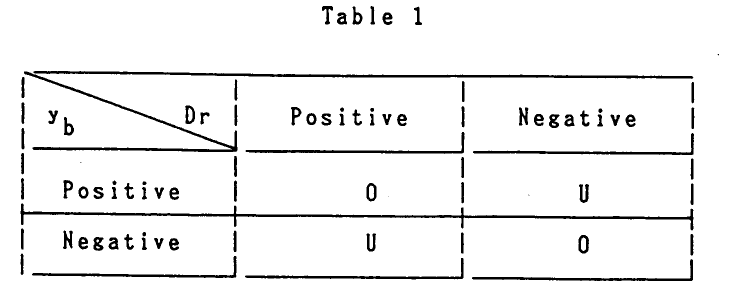

In Table 1, symbol O stands for over-steering, and symbol U stands for under-steering. The result of determination in accordance with Table 1 is output from the steering characteristic determining means 7.

The control characteristic correcting means 8 receives the vehicle speed Vv from the vehicle speed detector 3, the steering angle δ from the steering angle sensor 4, the signal corresponding to the result of determination from the driving wheel determining circuit 10, and the signal corresponding to the result to determination from the steering characteristic determining circuit 7. According to these input signals, the control characteristic correcting means 8 generates signals from an output terminal C connected to a non-inversion terminal of the first comparator 21 and an output terminal D connected to a non-inversion terminal of the second comparator 22. In the case that the vehicle is a front wheel drive vehicle, and the steering angle δ is relatively small, the output value from the output terminal C of the control characteristic correcting means 8 is set as shown by a solid line in Fig. 5, for example, and the output value from the output terminal D is set as shown by a broken line in Fig. 5, for example, according to the vehicle speed Vv and the result of determination by the steering characteristic determining means 7. In the case that the vehicle is a rear wheel drive vehicle, the output values different from those in Fig. 5 are set, and when the steering angle is relatively large, the output values from the output terminals C and D are set to be smaller than those shown in Fig. 5.

In operation, the yaw rate y of the vehicle is obtained by multyplying the difference (Vr - Vl) in wheel speeds between the left and right trailing wheels Wl and Wr by the proportional constant d, and then filtering the product by means of the filter 13 to thereby eliminate the influence of the vehicle suspension. Thus, the yaw rate y can be easily obtained with no problems in practial use.

When the absolute value of the deviation Dr between the yaw rate y as presumed above and the reference yaw rate y_{b} calculated as a value to be presently desired according to the history of the steering angle δ and the history of the yaw rate y exceeds the output values from the output terminals C and D of the control characteristic correcting means 8, the driving wheel output torque control means 23 operates to preliminariliy perceive that the vehicle will yaw in an undesirable direction, and control the yaw motion.

In a front-wheel drive vehicle, for example, when an excessive driving force is applied as the vehicle is steered, the tendency of under-steering occurs. As a result, when it is detected that the vehicle has yawed in an undesirable direction, the driving wheel torque control circuit 23 operates in response to the outputs from the first and second comparators 21 and 22 to reduce an engine output. In response to the reduction in the engine output, a driving force of driving wheels is reduced, and instead thereof, a limited side force of the driving wheels is increased, thereby preventing the under-steering as mentioned above. On the other hand, in the case of a rear wheel drive vehicle, the tendency of over-steering occurs when an excessive driving force is applied. However, the over-steering may be prevented by reducing the driving force in the same manner as in the case of the front wheel drive vehicle. Thus, when the actual yaw rate y has approached the reference yaw rate y_{b} by reducing the engine output, the reduction in the engine output is released, and a normal engine output control is restored.

Furthermore, the output values from the output terminals C and D of the control characteristic correcting means 8 are set to be different according to the result of determination by the steering characteristic determining means 7. For example, when the tendency of over-steering occurs in a front wheel drive vehicle, a vehicle speed can be decreased to make a vehicle body stable before the vehicle body comes into the over-steering condition since the output value from the output terminal D is set to be smaller than the output value from the output terminal C. Further, in both the over-steering and the under-steering conditions, the output from the first comparator 21 becomes a low level before the output from the second comparator 22 becomes a low level, and accordingly the driving wheel output torque control circuit 23 operates to make lean the fuel mixture to be supplied to the engine, thus gradually decreasing the driving force. In this manner, it is possible to avoid the occurrence of over-controlling by gradually reducing the driving force.

When the steering angle δ is large at low vehicle speeds, the steering characteristic of the vehicle becomes non-linear, but the reference yaw rate y_{b} generated from the reference yaw rate generating means 5 is linear. Therefore, the deviation Dr between the reference yaw rate y_{b} and the yaw rate y becomes large. However, since the output values from the control characteristic correcting means 8 to the first and second comparators 21 and 22 are so set as to become small as the vehicle speed Vv increases. Accordingly, it is possible to prevent over-control at low vehicle speed running, and also prevent under-control at high vehicle running.

Further, since the output values from the control characteristic correcting means 8 are so set as to decrease as the steering angle δ increases, the output from the first comparator 21 or the second comparator 22 tends to become a low level. Accordingly, it is possible to prevent under-control due to an increased inertia force of the yaw motion when the steering handle H is steered at a large angle.

Further, since the output values from the control characteristic correcting means 8 varies according to whether the driving wheels are the front wheels or the rear wheels, it is possible to provide proper control of the yaw motion in response to a steering characteristic which varies according to whether the vehicle is a front wheel drive vehicle or a rear wheel drive vehicle.

Moreover, the driving wheel output torque control circuit 23 operates to select the control mode for making lean the fuel mixture to be supplied to the engine or the control mode for cutting the fuel supply to the engine according to the output from the control characteristc correcting means 8. Accordingly, more precise control can be provided as compared with only the control mode for cutting the fuel supply, thereby eliminating uncomfortability due to a large torque difference and preventing the over-control.

According to the first and second embodiments, the reference yaw rate y_{b} is calculated according to the history of the steering angle and the history of the yaw rate. The history of the yaw rate is influenced as a correction by the reference yaw rate factor, which is mainly calculated in accordance with the history of the steering angle.

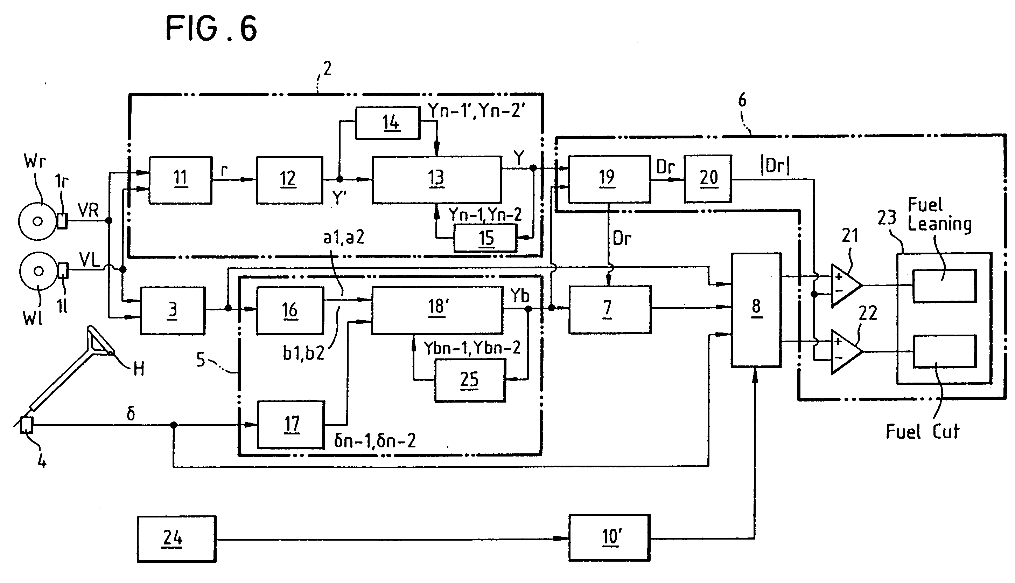

Fig. 6 shows another embodiment of the present invention, wherein the corresponding parts as in the preferred embodiment shown in Fig.3 are designated by the same reference numerals. An arithmetic circuit 18' in a reference yaw rate generating means 5' calculates a reference yaw rate y_{b} in accordance with the following expression (3).${\text{y}}_{\text{b}} {\text{= -a}}_{\text{1}} {\text{*y}}_{\text{bn-1}} {\text{-a}}_{\text{2}} {\text{*y}}_{\text{bn-2}} {\text{+b}}_{\text{1}} {\text{*δ}}_{\text{n-1}} {\text{+b}}_{\text{2}} {\text{*δ}}_{\text{n-2}}$

That is, the history of the reference yaw rate y_{b} obtained by the arithmetic circuit 18' is accumulated in a history accumulation circuit 25. The arithmetic circuit 18' receives the history y_{bn-1} and y_{bn-2} of the reference yaw rate y_{b} from the history accumulation circuit 25 and the history δₙ₋₁ and δₙ₋₂ of the steering angle δ from the history accumulation circuit 17 to calculate the reference yaw rate y_{b}.

A signal from a driving force distribution circuit 24 is input to a driving wheel determination circuit 10'. The driving force distribution circuit 24 serves to control the distribution of a driving force to be applied to the front wheels and the rear wheels of the vehicle. The distribution rate of the driving force is detected by the driving wheel determination circuit 10', and is input to the control characteristic correcting means 8.

According to this embodiment, since the reference yaw rate y_{b} is calculated according to the history of the reference yaw rate y_{b}, the long history of the steering angle can be expressed in the simple equation because the history of the reference yaw rate includes the history of the steering angle. It has been found that the reference yaw rate can be assumed by long period of history of the steering angle, but long history requires large number of constants (steering response parameter; b₁, b₂ ....). The long time requires to set the many constants. Therefore, the simple equation has 4 constants to ease to set their value.

According to a further embodiment, the vehicle speed detector 3 may output as the vehicle speed Vv an average of the wheel speeds Vl and Vr of the trailing wheels Wl and Wr. Although, the above-mentioned embodiments employ the system of comparing the deviation Dr between the reference yaw rate y_{b} and the actual yaw rate y with a reference value, an engine output (e.g. throttle opening) may be controlled in proportion to the difference between the deviation Dr and the reference value. Further, although the reference yaw rate y_{b} is calculated from the history (n-1, n-2) at the last time and the before-last time in the previous embodiments, the reference yaw rate y_{b} may be calculated from the history (n-1,n-2,n-3,...) at more previous times.

## Claims

1. A yaw motion control device for a vehicle comprising
- a yaw rate detecting means (1a; 2) for detecting a yaw rate of said vehicle;
- a reference yaw rate generating means (2a; 5; 5') for generating a reference yaw rate (y_{b}) in response to a steering angle and a vehicle speed;
- a yaw motion correction means (6) for controlling a yaw motion of said vehicle in response to outputs from said reference yaw rate generating means (2a; 5; 5') and said yaw rate detecting means (1a; 2),
characterized in that
- said reference yaw rate generating means (2a; 5; 5') is designed for generating said reference yaw rate (y_{b}) in response to a history of said steering angle, and in further comprising
- a steering characteristic determining means (7) for determining a steering characteristic, either oversteering or understeering of said vehicle, according to the output from said reference yaw rate generating means and the output from the yaw rate detecting means; and
- a control characteristic correcting means (8) for changing a control characteristic of said yaw motion correction means (6) in response to an output from said steering characteristic determining means (7).

2. A yaw motion control device according to claim 1, further comprising a deviation calculation circuit (19) for providing a deviation signal (Dr) as a difference between said reference yaw rate (y_{b}) and a yaw rate (y) of said vehicle.

3. A yaw motion control device according to claim 2, wherein said steering characteristic determining means (7) provides a first output signal and a second output signal alternatively in dependence on the sign of the reference yaw rate (y_{b}) and the deviation signal (Dr).

4. A yaw motion control device according to any of the preceding claims, comprising a steering characteristic discriminating device, said steering characteristic discriminating device comprising said reference yaw rate generating means, said yaw rate detecting means and the steering characteristic determining means.

## Patentansprüche

1. Gierbewegungssteuer/regeleinrichtung für ein Fahrzeug, umfassend:
- ein Gierbetragserfassungsmittel (1a; 2) zum Erfassen eines Gierbetrags des Fahrzeugs;
- ein Referenzgierbetragserzeugungsmittel (2a; 5; 5') zum Erzeugen eines Referenzgierbetrags (y_{b}) in Antwort auf einen Lenkwinkel und eine Fahrzeuggeschwindigkeit;
- ein Gierbewegungskorrekturmittel (6) zum Steuern/Regeln einer Gierbewegung des Fahrzeugs in Antwort auf Ausgaben von dem Referenzgierbetragserzeugungsmittel (2a; 5; 5') und dem Gierbetragserfassungsmittel (1a; 2),
**dadurch gekennzeichnet,** daß
- das Referenzgierbetragserzeugungsmittel (2a; 5; 5') zum Erzeugen des Referenzgierbetrags (y_{b}) in Antwort auf eine Entwicklung des Lenkwinkels ausgebildet ist, und dadurch, daß sie ferner umfaßt
- ein Lenkcharakteristikbestimmungsmittel (7) zum Bestimmen einer Lenkcharakteristik, entweder ein Übersteuern oder ein Untersteuern des Fahrzeugs, gemäß der Ausgabe von dem Referenzgierbetragserzeugungsmittel und der Ausgabe von dem Gierbetragserfassungsmittel; und
- ein Steuer/Regelcharakteristikkorrekturmittel (8) zum ändern einer Steuer/Regelcharakteristik des Gierbewegungskorrekturmittels (6) in Antwort auf eine Ausgabe von dem Lenkcharakteristikbestimmungsmittel (7).

2. Gierbewegungssteuer/regeleinrichtung nach Anspruch 1, ferner umfassend eine Abweichungsberechnungsschaltung (19) zum Vorsehen eines Abweichungssignals (Dr) als eine Differenz zwischen dem Referenzgierbetrag (y_{b}) und einem Gierbetrag (y) des Fahrzeugs.

3. Gierbewegungssteuer/regeleinrichtung nach Anspruch 2, worin das Lenkcharakteristikbestimmungsmittel (7) ein erstes Ausgangssignal und alternativ ein zweites Ausgangssignal in Abhängigkeit von dem Vorzeichen des Referenzgierbetrags (Y_{b}) und des Abweichungssignals (Dr) vorsieht.

4. Gierbewegungssteuer/regeleinrichtung nach einem der vorhergehenden Ansprüche, umfassend eine Lenkcharakteristikunterscheidungseinrichtung, wobei die Lenkcharakteristikunterscheidungseinrichtung das Referenzgierbetragserzeugungsmittel, das Gierbetragserfassungsmittel und das Lenkcharakteristikbestimmungsmittel umfaßt.

## Revendications

1. Dispositif de contrôle de lacet pour véhicule comprenant :
- des moyens de détection de degré de lacet (1a; 2) destinés à détecter un degré de lacet du dit véhicule;
- des moyens générateurs de degré de lacet de référence (2a; 5; 5') destinés à générer un degré de lacet de référence (y_{b}) en fonction d'un angle de direction et d'une vitesse de véhicule;
- des moyens de correction de lacet (6) destinés à commander un lacet du dit véhicule en fonction des sorties en provenance des dits moyens générateurs de degré de lacet de référence (2a; 5; 5') et des dits moyens de détection de degré de lacet (1a; 2),
caractérisé en ce que
- lesdits moyens générateurs de degré de lacet de référence (2a; 5; 5') sont conçus pour générer ledit degré de lacet de référence (y_{b}) en fonction d'un historique du dit angle de direction, et en ce qu'il comprend en outre
- des moyens de détermination de caractéristique de direction (7) destinés à déterminer une caractéristique de direction, soit un sous-virage, soit un survirage du dit véhicule, en fonction de la sortie en provenance des dits moyens générateurs de degré de lacet de référence et de la sortie en provenance des dits moyens de détection de degré de lacet; et
- des moyens de correction de caractéristique de commande (8) destinés à modifier une caractéristique de commande des dits moyens de correction de lacet (6) en fonction d'une sortie en provenance des dits moyens de détermination de caractéristique de direction (7).

2. Dispositif de contrôle de lacet selon la revendication 1, comprenant en outre un circuit de calcul de déviation (19) destiné à fournir un signal de déviation (Dr) comme étant une différence entre ledit degré de lacet de référence (y_{b}) et un degré de lacet (y) du dit véhicule.

3. Dispositif de contrôle de lacet selon la revendication 2, dans lequel lesdits moyens de détermination de caractéristique de direction (7) fournissent en alternance un premier signal de sortie et un second signal de sortie en fonction du signe du degré de lacet de référence (y_{b}) et du signal de déviation (Dr).

4. Dispositif de contrôle de lacet selon quelqu'une des revendications qui précèdent, comprenant un dispositif de discrimination de caractéristique de direction, ledit dispositif de discrimination de caractéristique de direction comprenant lesdits moyens générateurs de degré de lacet de référence, lesdits moyens de détection de degré de lacet et les moyens de détermination de caractéristique de direction.
